# EUROPÄISCHE PATENTANMELDUNG

(11) **EP 0 956 937 A1**
(43) Veröffentlichungstag der Anmeldung: **17.11.1999**
(21) Anmeldenummer: 99109541.5
(22) Anmeldetag: 12.05.1999
(51) Int. Cl.: B29C 47/88

(54) **Verfahren zur Herstellung von Blasfolien sowie Einrichtung zur Durchführung des Verfahrens**

(30) Priorität: 15.05.1998 DE 19821856
(71) Anmelder: lean tec Entwicklungs GmbH, 33775 Versmold (DE)
(72) Erfinder: Thäle,Eckhard, Ing., 33790 Halle /Westf./ (DE)
(74) Vertreter: Schulze Horn & Partner GbR

(57) **Zusammenfassung**

Die Erfindung betrifft ein Verfahren zur Herstellung von Blasfolien, wobei aus einem Extruder (10) mit mindestens einem Ein- oder Mehrschicht-Extruderkopf (11) ein Folienschlauch (3) aus thermoplastischem Kunststoff kontinuierlich ausgegeben wird, wobei nahe dem Extruderkopf (11) der Folienschlauch (3) durch einen in dessen schräg nach oben und außen verlaufende Bewegungsrichtung ringförmig ausgeblasenen Kühlluftschleier (2) einer gewünschten Temperatur gekühlt wird, wobei radial außerhalb des Kühlluftschleiers (2) konzentrisch zu diesem ein Zusatz-Luftschleier (4) ebenfalls ringförmig ausgeblasen wird und wobei die abgekühlte und erstarrte Folie abgezogen und dann aufgewickelt oder weiterverarbeitet wird.

Das neue Verfahren ist dadurch gekennzeichnet, daß der Zusatz-Luftschleier (4) in einem solchen radialen Abstand vom Kühlluftschleier (2) ausgeblasen wird, daß der Zusatz-Luftschleier (4) zumindest in dem noch nicht erstarrten Bereich des Folienschlauchs (3) vom Kühlluftschleier (2) radial beabstandet und getrennt um diesen herum in laminarer Strömung nach oben strömt.

Außerdem betrifft die Erfindung eine Einrichtung zur Durchführung des Verfahrens.

## Beschreibung

Die vorliegende Erfindung betrifft ein Verfahren zur Herstellung von Blasfolien, wobei aus einem Extruder mit mindestens einem Ein- oder Mehrschicht-Extruderkopf ein Folienschlauch aus thermoplastischem Kunststoff kontinuierlich ausgegeben wird, wobei nahe dem Extruderkopf der Folienschlauch durch einen in dessen schräg nach oben und außen verlaufende Bewegungsrichtung ringförmig ausgeblasenen Kühlluftschleier einer gewünschten Temperatur gekühlt wird, wobei radial außerhalb des Kühlluftschleiers konzentrisch zu diesem ein Zusatz-Luftschleier ebenfalls ringförmig ausgeblasen wird und wobei die abgekühlte und erstarrte Folie abgezogen und dann aufgewickelt oder weiterverarbeitet wird.

Außerdem betrifft die Erfindung eine Einrichtung zur Durchführung des Verfahrens, mit mindestens einem Extruder mit mindestens einem Ein- oder Mehrschicht-Extruderkopf, aus dem ein Folienschlauch aus thermoplastischem Kunststoff kontinuierlich ausgebbar ist, mit einem den Folienschlauch nahe dem Extruderkopf umgebenden Kühlring, aus dem ein Kühlluftschleier einer gewünschten Temperatur in der schräg nach oben und außen verlaufenden Bewegungsrichtung des Folienschlauchs ausblasbar ist, mit mindestens einer weiteren ringförmigen Luftdüse, mit der radial außen vom Kühlluftschleier ein Zusatz-Luftschleier ausblasbar ist, und mit Mitteln zum Abziehen und Aufwickeln oder Weiterverarbeiten der abgekühlten und erstarrten Folie.

Ein Verfahren und eine Einrichtung zur Durchführung des Verfahrens sind aus der DE 42 05 185 A1 bekannt. Die hier beschriebene Einrichtung besitzt einen Kühlring, dessen äußerer ringförmiger Teil sich in Extrusionsrichtung über den Düsenspalt hinaus erstreckt und eine ringförmige Luftleitfläche für den Kühlluftschleier bildet. Weiterhin ist dort vorgesehen, daß der äußere ringförmige Teil in einer zu dem Düsenspalt parallelen Ebene auf einer zu diesem horizontalen Kreislinie mit Bohrungen oder einem ringförmigen Spalt versehen ist, die bzw. der in der Luftleitfläche münden bzw. mündet und aus denen ein Zusatz-Luftschleier ausblasbar ist. Bevorzugt verlaufen dabei die Bohrungen oder der Spalt spitzwinklig oder etwa parallel zu der Luftleitfläche. Der Zweck dieser Anordnung besteht darin, einerseits eine Saugwirkung des Kühlluftschleiers auf den extrudierten Folienschlauch im Bereich des Kühlringes zu verhindern und andererseits eine ungleichmäßige Abkühlung durch ein unkontrolliertes Hinzutreten wärmerer Umgebungsluft zu vermeiden. Den angegebenen Zweck vermag die bekannte Einrichtung sicherlich zu erfüllen, jedoch bietet sie keine Schutzmaßnahmen gegen aus der Umgebung der Einrichtung kommende störende Luftströmungen und/oder Luftdruckschwankungen. Solche Störungen können in der Praxis allein schon dadurch entstehen, daß eine Tür zum Aufstellungsraum der Einrichtung kurzzeitig geöffnet wird. Diese störenden Luftströmungen oder Luftdruckschwankungen deformieren den Kühlluftschleier und beeinflussen dadurch in unerwünschter Weise dessen Wirkung auf den extrudierten Folienschlauch. Im Ergebnis kommt es zu einer ungleichmäßigen Abkühlung und damit zu einer schwankenden, inhomogenen Qualität der erzeugten Folie, was deren Wert mindert.

Zur Behebung dieser störenden Luftströmungswirkungen auf die Folie wäre es theoretisch denkbar, vom Extruderkopf ausgehend den Folienschlauch komplett einzukapseln; diese Maßnahme ist jedoch in der Praxis nicht sinnvoll anwendbar, weil während der laufenden Produktion der Folienschlauch, insbesondere in seinem plastischen Bereich, für das Bedienungspersonal ständig sichtbar und beobachtbar sein sollte, um eventuell erforderliche Steuerungsmaßnahmen an den einzelnen Komponenten der Einrichtung zur Folienherstellung vorzunehmen, und weil außerdem bei einer Einkapselung eine unabdingbar erforderliche Wärmeabfuhr aus dem die Folie bildenden erhitzten thermoplastischen Kunststoffmaterial nicht mehr in einem ausreichenden Maße gewährleistet wäre.

Es stellt sich deshalb die Aufgabe, ein Verfahren und eine Einrichtung der eingangs genannten Art zu schaffen, die die dargelegten Nachteile vermeiden und mit denen insbesondere die Herstellung von besonders gleichmäßigen Blasfolien möglich ist, wobei der Aufwand zur Durchführung des Verfahrens und zum Betreiben der Einrichtung in einem wirtschaftlich vertretbaren Rahmen bleiben soll und wobei das Bedienungspersonal bei der Überwachung des Herstellungsvorganges und bei der Bedienung der Einrichtung nicht behindert werden soll.

Die das Verfahren betreffende Aufgabe wird erfindungsgemäß dadurch gelöst, daß der Zusatz-Luftschleier in einem solchen radialen Abstand vom Kühlluftschleier ausgeblasen wird, daß der Zusatz-Luftschleier zumindest in dem noch nicht erstarrten Bereich des Folienschlauchs vom Kühlluftschleier radial beabstandet und getrennt um diesen herum in laminarer Strömung nach oben strömt.

Erfindungswesentlich bietet der Zusatz-Luftschleier den Nutzen, daß er eventuell auftretende störende Luftströmungen und Luftdruckschwankungen im Aufstellungsraum des Extruders von der noch nicht erstarrten Folie und von dem Kühlluftschleier fernhält oder wenigstens in ihrer Wirkung auf ein unschädliches Maß mindert. Gleichzeitig bietet dieser Zusatz-Luftschleier den Vorteil, daß er durchsichtig ist und die Beobachtung des Folienschlauchs durch das Bedienungspersonal nicht behindert und daß er außerdem die Wärmeabfuhr aus dem den Folienschlauch bildenden, zunächst heißen thermoplastischen Kunststoffmaterial nicht beeinträchtigt; vielmehr kann der Zusatz-Luftschleier sogar vorteilhaft zur zusätzlichen Wärmeabfuhr herangezogen werden.

Um den Zusatz-Luftschleier einerseits möglichst einfach erzeugen zu können und um ihn andererseits möglichst stabil und wirksam zu machen, ist weiter vorgesehen, daß der Zusatz-Luftschleier parallel zur Längsachse des Folienschlauchs ausgeblasen wird und in Form eines Hohlzylinders mit im wesentlichen gleichbleibendem Durchmesser, der größer als der größte Folienschlauch-Durchmesser ist, nach oben strömt.

Auch wenn der Kühlluftschleier und der Zusatz-Luftschleier einen radialen Abstand voneinander haben, besteht dennoch die Möglichkeit, daß die Luftströmung des Kühlluftschleiers ungünstige und deshalb unerwünschte Strömungswirkungen, insbesondere Induktionswirkungen, auf den Zusatz-Luftschleier ausübt, die dessen Funktion und Wirksamkeit verschlechtern können. Um dem vorzubeugen, ist bevorzugt vorgesehen, daß in Höhe des Extruderkopfes in den Bereich zwischen Kühlluftschleier und Zusatz-Luftschleier Ergänzungsluft so gesteuert eingelassen oder eingeleitet wird, daß durch Strömungseffekte des Kühlluftschleiers verursachte, auf den Zusatz-Luftschleier radial nach innen wirkende Ablenkungskräfte vermieden oder ausgeglichen werden.

Eine erfindungsgemäße Einrichtung gemäß dem Oberbegriff des Anspruchs 4 zur Durchführung des Verfahrens ist dadurch gekennzeichnet, daß konzentrisch zu dem Kühlring die Luftdüse so angeordnet ist, daß durch diese der Zusatz-Luftschleier in einem solchen radialen Abstand vom Kühlluftschleier ausblasbar ist, daß der Zusatz-Luftschleier zumindest in dem noch nicht erstarrten Bereich des Folienschlauchs vom Kühlluftschleier radial beabstandet und getrennt um diesen herum in laminarer Strömung nach oben strömt.

Diese Einrichtung ermöglicht die praktische Ausführung des oben dargelegten Verfahrens unter Erzielung der aufgeführten Vorteile. Die zusätzlich erforderlichen technischen Maßnahmen sind im Vergleich zu einer herkömmlichen Einrichtung nur von einem relativ geringen Umfang, so daß die Ausrüstung einer Einrichtung mit einer oder mehreren Luftdüsen zur Erzeugung des Zusatz-Luftschleiers kostengünstig möglich ist. Dabei ist sowohl der Kühlring als auch jede weitere Luftdüse je nach Bedarf mit Raumluft oder mit aufbereiteter Luft, z.B. mit gefilterter Reinluft, beschickbar. Außerdem bietet die Erfindung die vorteilhafte Möglichkeit der problemlosen Nachrüstung von bestehenden Einrichtungen, wodurch diese Einrichtungen dann für die Erzeugung von Folien mit einer höheren Gleichmäßigkeit und damit besseren Qualität einsetzbar sind. Maßnahmen am Gebäude, insbesondere im Aufstellungsraum der Einrichtung, sind dabei nicht erforderlich.

Um einen möglichst stabilen und damit störende Luftbewegungen aus der Umgebung wirkungsvoll abschirmenden Zusatz-Luftschleier zu erzeugen, ist weiter vorgesehen, daß die Luftdüse so konturiert und ausgerichtet ist, daß aus dieser der Zusatz-Luftschleier parallel zur Längsachse des Folienschlauchs ausblasbar ist und in Form eines Hohlzylinders mit im wesentlichen gleichbleibendem Durchmesser, der größer als der größte Folienschlauch-Durchmesser ist, nach oben strömt.

Damit der Zusatz-Luftschleier nicht durch die Strömung des Kühlluftschleiers, insbesondere durch von dieser verursachte Induktionseffekte, aus seiner gewünschten Form gebracht wird, schlägt die Erfindung weiter vor, daß zwischen dem Kühlring und der Luftdüse wenigstens ein steuerbarer Lufteinlaß vorgesehen ist, durch den in Höhe des Extruderkopfes in den Bereich zwischen Kühlluftschleier und Zusatz-Luftschleier Ergänzungsluft so gesteuert einlaßbar oder einleitbar ist, daß durch Strömungseffekte des Kühlluftschleiers verursachte, auf den Zusatz-Luftschleier radial nach innnen wirkende Ablenkungskräfte vermieden oder ausgeglichen werden. Dabei kann die Ergänzungsluft separat zugeführt oder, was einfacher ist, von der Luft für den Zusatz-Luftschleier abgezweigt werden.

Weiter wird vorgeschlagen, daß auch die aus der Luftdüse ausblasbare zusätzliche Luft und/oder gegebenenfalls die Ergänzungsluft durch (je) eine vorgeschaltete Luft-Temperiereinrichtung auf eine gewünschte Temperatur temperiert oder temperierbar ist. Durch diese Maßname kann die den Zusatz-Luftschleier bildende Luft und/oder die Ergänzungsluft gezielt unterstützend zur gewünschten Kühlung des Folienschlauchs eingesetzt werden.

Um die Kühlung des Folienschlauchs möglichst gezielt und variabel beeinflussen zu können, wird vorgeschlagen, daß dem Kühlring und jeder Luftdüse und gegebenenfalls dem Lufteinlaß je ein eigenes Gebläse mit nachgeschaltetem Luftkühler und bedarfsweise einem Luftfilter zugeordnet ist oder daß alternativ eine Zentralgebläseeinheit mit mindestens je einem nachgeschalteten Luftkühler und bedarfsweise einem Luftfilter sowie mit Mitteln zur Luftverteilung und Luftmengenregulierung vorgesehen ist.

Um für die Unterbringung der Mittel zur Erzeugung des Zusatz-Luftschleiers und gegebenenfalls für die Zuführung der Ergänzungsluft möglichst wenig Platz innerhalb der Einrichtung zu beanspruchen, sind bevorzugt der Kühlring und eine radial außen an diesem vorgesehene Anordnung einer oder mehrerer Luftdüsen und gegebenenfalls der Lufteinlaß als integriertes einheitliches Bauteil ausgebildet. Vorteilhaft kann ein solches einheitliches Bauteil komplett und damit zeitsparend ein- und ausgebaut und innerhalb der Einrichtung gehaltert werden. Außerdem vereinfacht diese Ausführung die Herstellung des Bauteils, was die erforderlichen Aufwendungen beim Bau der Einrichtung niedrig hält.

Eine alternative Ausführung, die insbesondere für eine Nachrüstung einer schon vorhandenen Einrichtung geeignet ist, schlägt vor, daß eine Anordnung einer oder mehrerer Luftdüsen und/oder gegebenenfalls der Lufteinlaß als eine oder mehrere separate Baueinheit(en) ausgebildet und radial außen um den Kühlring herum angeordnet sind/ist.

Wie an sich bekannt, kann jede Luftdüse eine ringförmige Luftaustrittsöffnung oder mehrere sich zu einer Ringform ergänzende Luftaustrittsöffnungen aufweisen, wobei die Öffnungen in ihrem Querschnitt und/oder in ihrer Kontur verstellbar sein können, um die Luftströmungsverhältnisse im Zusatz-Luftschleier gezielt beeinflussen und optimieren zu können. Zudem können zur Optimierung der Luftströmung und zur Anpassung an unterschiedliche Konturen des Folienschlauchs die Luftaustrittsöffnungen radial innen und/oder außen durch in ihrer Neigung verstellbare Luftleitwände begrenzt sein.

Zwei Ausführungsbeispiele einer erfindungsgemäßen Einrichtung werden im folgenden anhand einer Zeichnung erläutert. Die Figuren der Zeichnung zeigen:
- Figur 1: eine erste Einrichtung zur Herstellung von Blasfolien in einer schematischen Seitenansicht und
- Figur 2: eine zweite Einrichtung zur Herstellung von Blasfolien in schematischer Seitenansicht, teils im Vertikalschnitt.

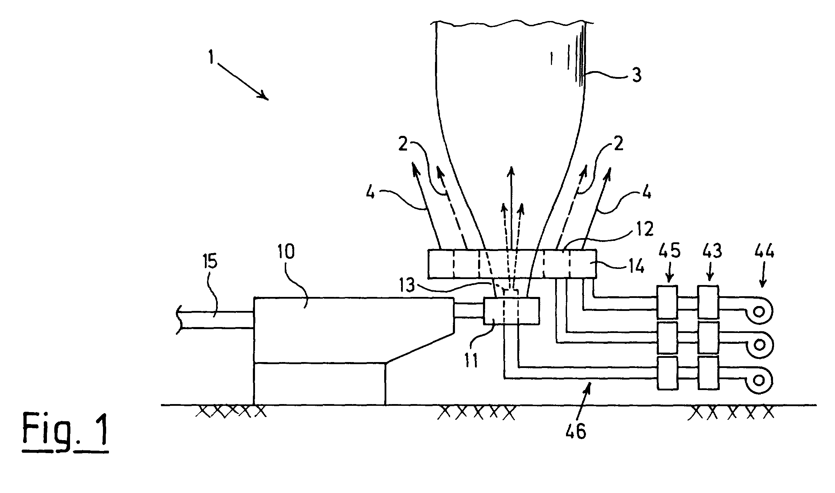

Die Figur 1 der Zeichnung zeigt eine erste Einrichtung 1 zur Herstellung von Blasfolien. Die Einrichtung 1 ist im Inneren eines nicht dargestellten Gebäudes angeordnet und umfaßt einen Extruder 10. Dem Extruder 10 ist über eine Förderleitung 15 ein thermoplastischer Kunststoff in Granulatform zuführbar. Dem Extruder 10 ist ein Extruderkopf 11 zugeordnet, aus welchem ein Folienschlauch 3 aus durch Erhitzung plastifiziertem Kunststoff extrudierbar ist. Mittels in das Innere des Folienschlauchs 3 durch eine Düse 13 eingeblasener Luft, hier gefilterter Reinluft, oder mittels von einer Innenluft-Anlage mit Kühler eingeblasenen Stickstoffs wird die Schlauchform erzeugt und in einer gewünschten Form gehalten, wie dies an sich bekannt ist. In unmittelbarer Nähe des Extruderkopfes 11 ist knapp über diesem ein Kühlring 12 angeordnet, aus welchem oberseitig ringförmig ein Kühlluftschleier 2 ausblasbar ist, wie dies durch Strömungspfeile angedeutet ist. Auch ein solcher Kühlring 12 ist an sich bekannt.

Der weitere Verlauf des Folienschlauchs 3 nach oben ist bei dem dargestellten Ausführungsbeispiel der Einrichtung 1 nicht dargestellt, da er zur Erläuterung der Erfindung nicht wesentlich ist.

Radial außen um den Kühlring 12 ist konzentrisch zu diesem eine zusätzliche ringförmige Luftdüse 14 angeordnet, aus der nach oben ein Zusatz-Luftschleier 4 ausblasbar ist, wie auch hier durch Strömungspfeile angedeutet ist. Die Kühlluft aus dem Kühlring 12 sowie die zusätzliche Luft aus den Luftdüsen 4 bilden zwei separate konzentrische und geschlossene Luftschleier 2 und 4, die sich etwa parallel zur Bewegungsrichtung des Folienschlauchs 3 nach oben bewegen. Vorteilhaft schirmt der Zusatz-Luftschleier 4 den Kühlluftschleier 2 und die Folie 3 gegen störende, von außen kommende Luftströmungen und Luftdruckschwankungen ab.

Beim vorliegenden Ausführungsbeispiel der Einrichtung 1 ist der zentralen Düse 13, der ringförmigen Luftdüse 14 und dem Kühlring 12 je ein eigenes Gebläse 44 zugeordnet, von dem aus Luft zunächst über je einen Luftkühler 43 und dann je einen Luftfilter 45 strömt und dann über Luftleitungen 46 zur Düse 13, zur Düse 14 und zum Kühlring 12 gelangt. Mittels der Luftkühler 43 kann die auszublasende Luft auf eine gewünschte Temperatur eingestellt werden, so daß eine gezielte Kühlung und damit Erstarrung der zunächst noch heißen plastischen Kunststoffmasse, die den Folienschlauch 3 bildet, bewirkt werden kann.

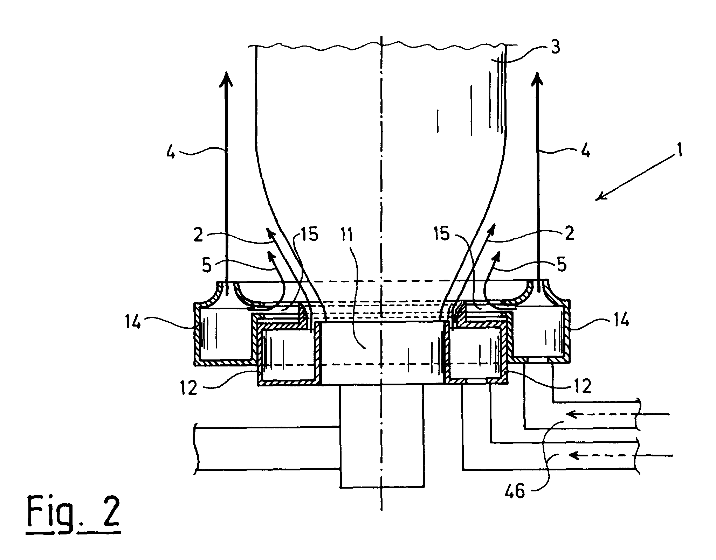

Die Figur 2 der Zeichnung zeigt eine zweite Einrichtung 1 zur Erzeugung von Blasfolien. Auch diese Einrichtung 1 besitzt einen Extruderkopf 11, aus dem kontinuierlich ein Folienschlauch 3 aus durch Erhitzung plastifiziertem thermoplastischen Kunststoff extrudierbar ist. Ein zugehöriger Extruder, der in der Zeichnung nicht dargestellt ist, ist im bekannter Art und Weise mit dem Extruderkopf 11 verbunden. Der Folienschlauch 3 tritt zunächst mit relativ geringem Durchmesser aus dem Extruderkopf 11 aus und wird, wie oben schon erläutert, auf einen größeren Durchmesser expandiert und dann abgekühlt, so daß die Folie 3 erstarrt und anschließend abgezogen und aufgewickelt oder weiterverarbeitet werden kann.

Um den Extruderkopf 11, der hier eine runde Umfangsfläche hat, ist ein Kühlring 12 angeordnet, der einen inneren Hohlraum aufweist, der zur Zuführung und Verteilung von Kühlluft dient, die durch eine Zuführleitung 46 zugeführt wird. Die Kühlluft kann zuvor aufbereitet worden sein, z.B. gefiltert und/oder auf eine gewünschte Temperatur gekühlt. Oberseitig besitzt der Kühlring 12 einen ringförmigen umlaufenden Schlitz, durch den die Luft schräg nach oben und außen hin austritt und einen im wesentlichen parallel zu dem sich erweiternden Folienschlauch 3 verlaufenden Kühlluftschleier 2 bildet.

Radial außen vom Kühlring 12 ist konzentrisch eine weitere Luftdüse 14 angeordnet, die ebenfalls als innen hohler Ring ausgeführt ist. Über eine zweite Luftzuführleitung 46 ist auch der Luftdüse 14 Luft zuführbar. Die Luftdüse 14 hat einen ersten Luftaustritt nach oben hin, durch den ein Zusatz-Luftschleier 4 ausgeblasen wird, der konzentrisch zum Folienschlauch 3 vertikal nach oben strömt und der dabei im wesentlichen die Form eines Hohlzylinders hat, dessen innerer Durchmesser größer ist als der größte äußere Durchmesser des Folienschlauchs 3.

Weiterhin besitzt die Luftdüse 14 einen radial nach innen weisenden Luftschlitz 15, durch den Ergänzungsluft 5 in den Bereich zwischen dem radial inneren Kühlluftschleier 2 und dem radial äußeren Zusatz-Luftschleier 4 einleitbar ist. Diese Ergänzungsluft 5 dient dazu, Strömungseffekte, die durch den Kühlluftschleier 2 im Hinblick auf den Zusatz-Luftschleier 4 erzeugt werden, in ihrer Wirkung auszugleichen oder auf unschädliche Ausmaße zu mindern. Die Menge der Ergänzungsluft 5 wird dabei z.B. durch Veränderung der Schlitzweite zweckmäßig so gesteuert, daß der Zusatz-Luftschleier 4 seine in der Zeichnung dargestellte ideale geradlinige Strömungsrichtung beibehält. In diesem Zustand bietet der Zusatz-Luftschleier 4 den besten Schutz des Kühlluftschleiers 2 und des noch plastischen Folienschlauchs 3 vor störenden, aus der Umgebung der Einrichtung 1 kommenden Luftströmungen und/oder Luftdruckschwankungen.

Die Anordnung von Kühlring 12 und Luftdüse 14 ist, abgesehen von den Luftzuführungsleitungen 46, rotationssymmetrisch um die Mittelachse des Folienschlauchs 3 getroffen, so daß der Folienschlauch 3 rundum von homogenen Luftschleiern umgeben ist. Hierdurch wird eine sehr homogene Dicke des Folienschlauchs 3 und damit eine gute Qualität der Folie gewährleistet.

## Patentansprüche

1. Verfahren zur Herstellung von Blasfolien, wobei aus einem Extruder (10) mit mindestens einem Ein- oder Mehrschicht-Extruderkopf (11) ein Folienschlauch (3) aus thermoplastischem Kunststoff kontinuierlich ausgegeben wird, wobei nahe dem Extruderkopf (11) der Folienschlauch (3) durch einen in dessen schräg nach oben und außen verlaufende Bewegungsrichtung ringförmig ausgeblasenen Kühlluftschleier (2) einer gewünschten Temperatur gekühlt wird, wobei radial außerhalb des Kühlluftschleiers (2) konzentrisch zu diesem ein Zusatz-Luftschleier (4) ebenfalls ringförmig ausgeblasen wird und wobei die abgekühlte und erstarrte Folie abgezogen und dann aufgewickelt oder weiterverarbeitet wird,
**dadurch gekennzeichnet**,
daß der Zusatz-Luftschleier (4) in einem solchen radialen Abstand vom Kühlluftschleier (2) ausgeblasen wird, daß der Zusatz-Luftschleier (4) zumindest in dem noch nicht erstarrten Bereich des Folienschlauchs (3) vom Kühlluftschleier (2) radial beabstandet und getrennt um diesen herum in laminarer Strömung nach oben strömt.

2. Verfahren nach Anspruch 1, dadurch gekennzeichnet, daß der Zusatz-Luftschleier (4) parallel zur Längsachse des Folienschlauchs (3) ausgeblasen wird und in Form eines Hohlzylinders mit im wesentlichen gleichbleibendem Durchmesser, der größer als der größte Folienschlauch-Durchmesser ist, nach oben strömt.

3. Verfahren nach Anspruch 1 oder 2, dadurch gekennzeichnet, daß in Höhe des Extruderkopfes (11) in den Bereich zwischen Kühlluftschleier (2) und Zusatz-Luftschleier (4) Ergänzungsluft (5) so gesteuert eingelassen oder eingeleitet wird, daß durch Strömungseffekte des Kühlluftschleiers (2) verursachte, auf den Zusatz-Luftschleier (4) radial nach innen wirkende Ablenkungskräfte vermieden oder ausgeglichen werden.

4. Einrichtung zur Durchführung des Verfahrens nach einem der Ansprüche 1 bis 3, mit mindestens einem Extruder (10) mit mindestens einem Ein- oder Mehrschicht-Extruderkopf (11), aus dem ein Folienschlauch (3) aus thermoplastischem Kunststoff kontinuierlich ausgebbar ist, mit einem den Folienschlauch (3) nahe dem Extruderkopf (11) umgebenden Kühlring (12), aus dem ein Kühlluftschleier (2) einer gewünschten Temperatur in der schräg nach oben und außen verlaufenden Bewegungsrichtung des Folienschlauchs (3) ausblasbar ist, mit mindestens einer weiteren ringförmigen Luftdüse (14), mit der radial außen vom Kühlluftschleier (2) ein Zusatz-Luftschleier (4) ausblasbar ist, und mit Mitteln zum Abziehen und Aufwickeln oder Weiterverarbeiten der abgekühlten und erstarrten Folie,
**dadurch gekennzeichnet**,
daß konzentrisch zu dem Kühlring (12) die Luftdüse (14) so angeordnet ist, daß durch diese der Zusatz-Luftschleier (4) in einem solchen radialen Abstand vom Kühlluftschleier (2) ausblasbar ist, daß der Zusatz-Luftschleier (4) zumindest in dem noch nicht erstarrten Bereich des Folienschlauchs (3) vom Kühlluftschleier (2) radial beabstandet und getrennt um diesen herum in laminarer Strömung nach oben strömt.

5. Einrichtung nach Anspruch 4, dadurch gekennzeichnet, daß die Luftdüse (14) so konturiert und ausgerichtet ist, daß aus dieser der Zusatz-Luftschleier (4) parallel zur Längsachse des Folienschlauchs (3) ausblasbar ist und in Form eines Hohlzylinders mit im wesentlichen gleichbleibendem Durchmesser, der größer als der größte Folienschlauch-Durchmesser ist, nach oben strömt.

6. Einrichtung nach Anspruch 4 oder 5, dadurch gekennzeichnet, daß zwischen dem Kühlring (12) und der Luftdüse (14) wenigstens ein steuerbarer Lufteinlaß (15) vorgesehen ist, durch den in Höhe des Extruderkopfes (11) in den Bereich zwischen Kühlluftschleier (2) und Zusatz-Luftschleier (4) Ergänzungsluft (5) so gesteuert einlaßbar oder einleitbar ist, daß durch strömungseffekte des Kühlluftschleiers (2) verursachte, auf den Zusatz-Luftschleier (4) radial nach innnen wirkende Ablenkungskräfte vermieden oder ausgeglichen werden.

7. Einrichtung nach einem der Ansprüche 4 bis 6, dadurch gekennzeichnet, daß die aus der Luftdüse (14) ausblasbare Luft (4) und/oder gegebenenfalls die Ergänzungsluft (5) durch (je) eine vorgeschaltete Luft-Temperiereinrichtung (43) auf eine gewünschte Temperatur temperiert oder temperierbar sind/ist.

8. Einrichtung nach einem der Ansprüche 4 bis 7, dadurch gekennzeichnet, daß dem Kühlring (12) und jeder Luftdüse (14) und gegebenenfalls dem Lufteinlaß (15) je ein eigenes Gebläse (44) mit nachgeschaltetem Luftkühler (43) und bedarfsweise einem Luftfilter (45) zugeordnet ist oder daß eine Zentralgebläseeinheit mit mindestens je einem nachgeschalteten Luftkühler (43) und bedarfsweise einem Luftfilter (45) sowie mit Mitteln zur Luftverteilung und Luftmengenregulierung vorgesehen ist.

9. Einrichtung nach einem der Ansprüche 4 bis 8, dadurch gekennzeichnet, daß der Kühlring (12) und eine radial außen an diesem vorgesehenen Anordnung einer oder mehrerer Luftdüsen (14) und gegebenenfalls der Lufteinlaß (15) als integriertes einheitliches Bauteil ausgebildet sind.

10. Einrichtung nach einem der Ansprüche 4 bis 8, dadurch gekennzeichnet, daß eine Anordnung einer oder mehrerer Luftdüsen (14) und/oder gegebenenfalls der Lufteinlaß (15) als eine oder mehrere separate Baueinheit(en) ausgebildet und radial außen um den Kühlring (12) herum angeordnet sind/ist.
